# EUROPÄISCHE PATENTSCHRIFT

(11) **EP 1 831 407 B1**
(45) Veröffentlichungstag und Bekanntmachung des Hinweises auf die Patenterteilung: **27.02.2008**
(21) Anmeldenummer: 05817935.9
(22) Anmeldetag: 02.12.2005
(51) Int. Cl.: C21C 5/56, C21C 5/52, F27D 17/00, F27D 13/00

(54) **VERFAHREN UND ANLAGE ZUR SEKUNDÄRSTAHLERZEUGUNG AUF SCHROTTBASIS**
METHOD AND INSTALLATION FOR THE PRODUCTION OF SECONDARY STEEL BASED ON SCRAP
PROCEDE ET DISPOSITIF DE FABRICATION D'ACIER SECONDAIRE A BASE DE FERRAILLES

(30) Priorität: 04.12.2004 DE 102004058492
(43) Veröffentlichungstag der Anmeldung: 12.09.2007
(73) Patentinhaber: SMS Demag AG, 40237 Düsseldorf (DE)
(72) Erfinder: MEYN, Matthias, 40476 Düsseldorf (DE)
(74) Vertreter: Valentin, Ekkehard
(86) Internationale Anmeldenummer: PCT/EP2005/012953
(87) Internationale Veröffentlichungsnummer: WO 2006/058787

(56) Entgegenhaltungen:
- WO-A-03/068995
- US-A- 4 437 186
- US-A- 4 559 629
- US-A- 5 000 425
- US-A- 5 520 372

## Beschreibung

Die Erfindung betrifft ein Verfahren und eine Anlage zur Sekundärstahlerzeugung auf Schrottbasis, wobei der Schrott über eine Chargiervorrichtung in einen Schrottvorwärmer eingetragen, dort vorgewärmt und anschließend in ein Schmelzaggregat gebracht und aufgeschmolzen wird, wobei das das Schmelzaggregat verlassende Prozessgas zur Vorwärmung des Schrotts genutzt und in einer Nachverbrennungsvorrichtung und einer anschließenden Entstaubungsanlage von Schadstoffen und Staub befreit als gekühltes gereinigtes Abgas aus der Anlage ausgeschleust wird.

Der Schrott wird bei derartigen Verfahren über eine Chargiervorrichtung in den Vorwärmer eingetragen, der in der Regel direkt mit dem heißen Abgas aus dem Schmelzaggregat, beispielsweise einem Elektrolichtbogenofen, beaufschlagt wird. Dieses wird zumeist durch den Vorwärmer gesaugt und erwärmt den Schrott. Das Abgas kühlt sich dabei ab. Der vorgewärmte Schrott (je nach Verfahren ca. 600 - 800 °C) wird dann in das Schmelzaggregat überführt und mittels elektrischer Energie eingeschmolzen. Unterstützend werden auch fossile Energieträger (Erdgas, Kohle und Öl), verwendet. Als Oxidator wird in der Regel technischer Sauerstoff (> 95,0 Vol.-% 0₂) eingesetzt. Als Zuschlagstoffe kommen überwiegend mineralische Produkte (Kalk und Dolomit) zur Schlackenbildung zum Einsatz.

Prozessbedingt unterliegen die Parameter (Temperatur, Zusammensetzung, Sauerstoffgehalt, Staubgehalt, Menge) des während eines Schmelzprozesses entstehenden Abgases (Prozessgas) starken Schwankungen. Außerdem wird der Schmelzprozess nicht kontinuierlich, sondern chargenweise betrieben (Batch-Betrieb).

Der Schrott enthält je nach Qualität, Art und Herkunft weitere Begleitstoffe. Die Zusammensetzung und Menge dieser überwiegend kohlenwasserstoffhaltigen Begleitstoffe (Öle, Fette, Kühlschmierstoffe, Beschichtungen, etc.) ist sehr verschieden.

Aus den veränderlichen Abgaswerten resultieren deshalb stark schwankende Betriebsparameter des Vorwärmers. Dies führt zu undefinierten und instationären Oxidationsbedingungen der am Schrott anhaftenden Begleitstoffe. Hierdurch wird die Bildung unerwünschter Abgasbestandteile (CO, unverbrannte Kohlenwasserstoffe, Aromaten, Chloride, ...) begünstigt. Diese entstehen überwiegend bei der Verdampfung und/oder (partiellen) Oxidation der am Schrott anhaftenden Bestandteile.

Zur Einhaltung der gesetzlichen Vorschriften ist daher eine aufwendige Abgasnachbehandlung zur Beseitigung und Abtrennung von unverbrannten Kohlenwasserstoffen und Dioxinen/Furanen erforderlich. Hierzu wird das Abgas nach dem Austritt aus dem Vorwärmer in einer Nachbrennkammer auf T > 850 °C aufgeheizt und nach einer Verweilzeit von t > 2s schnell auf ca. 200 °C abgekühlt (Quenche). Hierdurch soll die Neubildung (De-Novo-Synthese) von Dioxinen/Furanen (PCDD/F) unterdrückt werden. In einer nächsten Verfahrensstufe erfolgt dann die Abtrennung der restlichen PCDD/F durch Eindüsung von beispielsweise Braunkohlen-Koksstaub (Flugstromadsorption). Der eingedüste Koksstaub wird dann zusammen mit dem übrigen Feinstaub in einer Entstaubungsanlage abgetrennt.

Diese Art der Prozessführung gewährleistet zwar die Einhaltung der Emissionsgrenzwerte für PCDD/F von 0,01 ng TE/Nm³, ist aber mit erheblichen Zusatzaufwendungen verbunden (Primärenergiebedarf für die Brenner, Kühlwasser für die Quenche, Abwasserbehandlungssystem für die Quenche, Silo, Dosier- und Fördertechnik für den Koksstaub, etc.). Außerdem steigt der Kohlenstoff-Gehalt im Filterstaub über die zulässigen Grenzwerte an, so dass vor einer Deponierung eine thermische Nachbehandlung des Filterstaubes erforderlich ist.

Die Summe dieser Aufwendungen übersteigt den Nutzen (Einsparung an elektrischer Energie, Erhöhung der Produktivität), den man durch Einsatz der Schrottvorwärmsysteme erwarten kann, bei weitem. Außerdem sind die zusätzlichen Einrichtungen auch für zusätzliche Anlagenstörungen verantwortlich.

Um einige dieser Nachteile zu minimieren, wird in der WO 03/068995 A1 eine Schmelzanlage zur kontinuierlichen Stahlerzeugung unter Einsatz von metallischen Einsatzmaterialien vorgeschlagen. Die Einsatzmaterialien wie beispielsweise Schrott, Eisenschwamm oder dergleichen werden in einem oberen Teil eines in Form eines Schachtes ausgebildeten Einschmelzgefäßes vorgewärmt und anschließend in dessen unterem Teil mit fossilen Brennstoffen geschmolzen. Das erhaltene Schmelzgut wird kontinuierlich in ein benachbart angeordnetes als Lichtbogenofen ausgebildetes Behandlungsgefäß abgeführt, und dort wird mittels elektrischer Energie die gewünschte Stahlqualität eingestellt. Zur Nachverbrennung werden in verschiedenen Ebenen Nachverbrennungsgase von außen und von innen durch einen mittig in die Materialsäule hineinragenden Innenschacht in die Materialsäule eingeführt, durch die eine stufenweise Nachverbrennung der aufsteigenden Prozessgase bei Minimierung der Oxidation der eisenhaltigen Einsatzmaterialien erreicht wird.

Bei diesem bekannten Verfahren wird zur Einschmelzung des Schrotts ausschließlich Primärenergie verwendet. Die Beheizung der Schmelzstufe muss zur Verminderung der Eisenoxidation unterstöchiometrisch mit Luftzahlen im Bereich 0,5 - 0,9 erfolgen. Daher enthält das Abgas beim Austritt aus der eigentlichen Schmelzstufe noch große Mengen brennbarer Bestandteile (insbesondere CO, H₂ und CH₄). Hieraus resultiert zunächst eine schlechte Ausnutzung der eingesetzten Energieträger. Es sind daher weitergehende Maßnahmen zur Verbesserung der Energieausnutzung und somit zur Steigerung der Wirtschaftlichkeit erforderlich. Hierzu ist die Zuführung von Nachverbrennungsluft in den Schacht oberhalb der Schmelzzone (integrierte Nachverbrennung) vorgesehen. Diese Verfahrensweise verbessert zwar die Energieausnutzung, aber aus verschiedenen Gründen ist vermutlich keine vollständige Umsetzung der unverbrannten Stoffe im Schacht selbst möglich. Außerdem muss das Abgas zur Vermeidung einer zusätzlichen Nachverbrennungsstufe mit einer Temperatur > 800 °C am Austritt des Schachtes abgezogen werden.

Es ist Aufgabe der Erfindung, ein Verfahren und eine Anlage anzugeben, mit der die geschilderten Nachteile bei der Durchführung der Vorwärmung und des Einschmelzens unter ausschließlicher Verwendung von Primärenergie sicher vermieden oder zumindest minimiert werden.

Die gestellte Aufgabe wird verfahrensmäßig mit den kennzeichnenden Merkmalen des Anspruchs 1 und anlagemäßig mit den kennzeichnenden Merkmalen des Anspruchs 14 dadurch gelöst, dass, bezogen auf die Gasführung des Vorwärmsystems eine energetische, strömungstechnische und räumliche Entkoppelung von Vorwärmung und Schmelzen und eine energetische, strömungstechnische und räumliche Entkoppelung von Nachverbrennung und Vorwärmung durchgeführt wird.

Gegenüber einer konventionellen Abgasbehandlung, mit der Reihenfolge der Anlagenkomponenten:
Nachverbrennung - Kühlung - Schadstoffabtrennung - Entstaubung
besteht das erfindungsgemäße System im Prinzip zwar aus den gleichen Anlagenkomponenten, allerdings in der neuen Reihenfolge:
Schadstoffabtrennung - Nachverbrennung - Kühlung - Entstaubung

Das als Prozessgas bezeichnete Abgas aus der Schmelzstufe wird erfindungsgemäß nicht direkt zur Vorwärmung des Schrottes genutzt, d. h. die Vorwärmung erfolgt nicht unmittelbar durch das Prozessgas aus der Schmelzstufe, sondern über ein weiteres gasförmiges Vorwärmmedium, beispielsweise Luft, mit Sauerstoff angereicherter Luft oder Inertgas.

Das Prozessgas wird direkt unter Zumischung von Verbrennungssauerstoff der Nachbrennung zugeführt. Hierdurch ist durch Verwendung bewährter Mess- und Regeleinrichtungen eine kontrollierte und vollständige Umsetzung aller brennbaren Komponenten gewährleistet. Alternativ ist es dabei möglich, eine Teilmenge des Prozessgases ohne weitere Nachbehandlung direkt wieder zur Schmelzstufe zurückzuführen.

Das heiße Abgas aus der Nachverbrennung wird dann in einem Wärmetauscher zur Vorwärmung des Vorwärmmediums genutzt und dabei gekühlt.

Durch die Verwendung des Wärmetauschers anstelle einer Quenche erfolgt somit erfindungsgemäß eine thermische, energetische und räumliche Entkopplung der Prozessstufen: Schmelzen - Vorwärmung und Nachverbrennung - Vorwärmung.

Man gewinnt einen zusätzlichen Freiheitsgrad bezüglich der Prozessführung, weil nun eine Regelung der Heißlufttemperatur am Eintritt der Vorwärmstufe möglich ist. Dies kann durch Veränderung der Luftzahl in der Nachverbrennungsstufe, durch Veränderung der Luftmenge oder durch eine Kombination beider Maßnahmen erfolgen. Außerdem kann die Beheizung der Schmelzstufe unabhängig von der Nachverbrennung bzw. der Schrottvorwärmung gesteuert werden.

Das durch das Abgas im Wärmetauscher erzeugte heiße Vorwärmmedium wird dann im Gleichstrom oder Gegenstrom durch den Vorwärmer geleitet. Da sowohl Menge als auch Temperatur und Sauerstoffgehalt konstant gehalten werden können, lassen sich in der Vorwärmstufe konstante und stationäre Betriebsbedingungen einstellen. Damit kann auch die Schrottvorwärmtemperatur vor dem Chargieren konstant gehalten werden.

Durch die konstanten Betriebsbedingungen in der Vorwärmstufe (ausreichend hohe Heißlufttemperatur, konstanter 0₂-Gehalt bzw. deutlicher Sauerstoffüberschuss) werden alle unerwünschten Begleitstoffe vollständig oxidiert in die Gasphase überführt. Durch den hohen Sauerstoffüberschuss finden keine Verschwelungs-/Verkokungsreaktionen statt, wodurch die Bildung bestimmter Vorläufersubstanzen für PCDD/F bereits wirkungsvoll verhindert wird. Die leichtflüchtigen Substanzen werden mit dem Vorwärmmedium aus dem Vorwärmer ausgetragen.

Die schadstoffbeladene Abluft wird dann durch einen Adsorber geführt. In diesem werden die Schadstoffe aus der Gasphase an einen porösen Feststoff übertragen und somit aufkonzentriert. Als Adsorbens eignet sich insbesondere Aktivkoks auf Braunkohlenbasis (Herdofenkoks (HOK)) oder spezielle Adsorbensmischungen. Das sehr gute Abscheideverhalten von HOK für organische Substanzen und Alkalien ist aus verschiedenen Anwendungen (insbesondere Müllverbrennungsanlagen - Rauchgasreinigung) bekannt. Das beladene Adsorbens wird entweder vollständig aus dem Prozess ausgeschleust oder aber teilweise in die Schmelzstufe rezirkuliert.

Das gereinigte Vorwärmmedium wird, sofern es Sauerstoff enthält, zur Nachverbrennung des Prozessgases verwendet. Je nach Prozessgasparametem kann dabei eine Stützfeuerung förderlich sein.

Der Schrott am Austritt des Vorwärmers ist "sauber", d. h. sämtliche anhaftenden Kohlenwasserstoffe sind in die Gasphase überführt worden. Hierdurch wird die Staubbeladung des Prozessgases am Austritt der Schmelzstufe gegenüber dem normalen bekannten Prozess deutlich vermindert.

Gegenüber einem konventionellen Prozess kann zudem auf eine Sekundär- bzw. Raumentstaubung verzichtet werden, weil alle Komponenten gasdicht konstruiert werden können. Dies ermöglicht eine deutliche Reduzierung der zu behandelnden Abgasmengen und damit der Baugröße der einzelnen Anlagenteile. Die Verfahrensführung ermöglicht somit durch die erfindungsgemäße energetische Entkopplung der Prozessstufen Schmelzen - Vorwärmen - Nachverbrennung eine hohe Prozessflexibilität und gleichzeitig eine hohe Energieeffizienz.

Ergänzend können erfindungsgemäß zusätzliche Bypassleitungen im Heißluftkreislauf installiert werden, um die Temperaturführung des Gesamtprozesses zu verbessern:
- Zumischung von kalter Luft zu der schadstoffbeladenen Warmluft am Austritt des Schrottvorwärmers zur Regelung der Eintrittstemperatur in die Adsorbiervorrichtung.
- Rückführung von gereinigter Warmluft direkt in den Frischluftstrom vor dem Wärmetauscher zur Regelung der Temperatur in der Nachbrennungsvorrichtung.
- Verwendung eines Teils der Heißluft als Oxidator für das Schmelzaggregat. Die Zuführung kann direkt in die Schmelzzone erfolgen.
- Verwendung eines Teils der Heißluft als Oxidator für die Nachverbrennung. Hierdurch kann die Abgastemperatur bei niedrigem Restheizwert oder kleiner Prozessgasmenge (kleine Schmelzleistung) angehoben bzw. konstant gehalten werden. Diese Schaltung ist auch zum Anfahren des Prozesses aus dem kalten Zustand heraus vorteilhaft, um schnell auf Produktionstemperatur zu kommen.

In einer Ausführungsvariante der Erfindung kann als Vorwärmmedium für den Schrott ein weiteres bzw. anderes Medium (z. B. ein Inertgas) verwendet werden, wobei die für die Nachverbrennung des Prozessgases benötigte Nachverbrennungsluft dann in einem zweiten Wärmetauscher aufgeheizt wird. Dieses weitere bzw. andere Vorwärmmedium wird dann in einem geschlossenen Kreislauf zwischen den Anlagenkomponenten
Wärmetauscher - Schrottvorwärmer - Adsorbiervorrichtung
geführt. Hierdurch erfolgt eine weitergehende Entkopplung der Verbrennungsstufe von der Vorwärmstufe, wobei höhere Schrotttemperaturen am Austritt des Vorwärmers realisiert werden können. Dieser sind allerdings infolge der mit steigender Gastemperatur zunehmenden Oxidationsneigung des Schrottes bei Kontakt mit sauerstoffhaltigen Gasen prozesstechnische und wirtschaftliche Grenzen gesetzt.

Weitere Einzelheiten zum Grundprinzip der Erfindung werden nachfolgend an in schematischen Zeichnungsfiguren dargestellten Fließbildern näher erläutert. In den Darstellungen sind nur die Prozessschritte und Stoffströme enthalten, welche für das Verständnis der Erfindung erforderlich sind. So fehlen beispielsweise die meisten Kühlwasserströme, Grobstaub- und Funkenabscheider sowie die Einrichtungen zur Raumentstaubung.

Es zeigen:
- Fig. 1: ein vereinfachtes Schema einer typischen Vorwärm- und Abgasbehandlung eines Schmelzprozesses mit Schrottvorwärmung nach dem Stand der Technik,
- Fig. 2: ein vereinfachtes Schema der offenen Vorwärm- und Abgasbehandlung des Schmelzprozesses mit Schrottvorwärmung nach der Erfindung,
- Fig. 3: eine durch Bypassleitungen erweiterte Vorwärm- und Abgasbehandlung des Grundfließbildes der Fig. 2 in einem Teilausschnitt,
- Fig. 4: ein alternatives Schema der Vorwärm- und Abgasbehandlung mit geschlossenem Kreislauf des Vorwärmmediums und separater Nachverbrennungsluft-Vorwärmung.

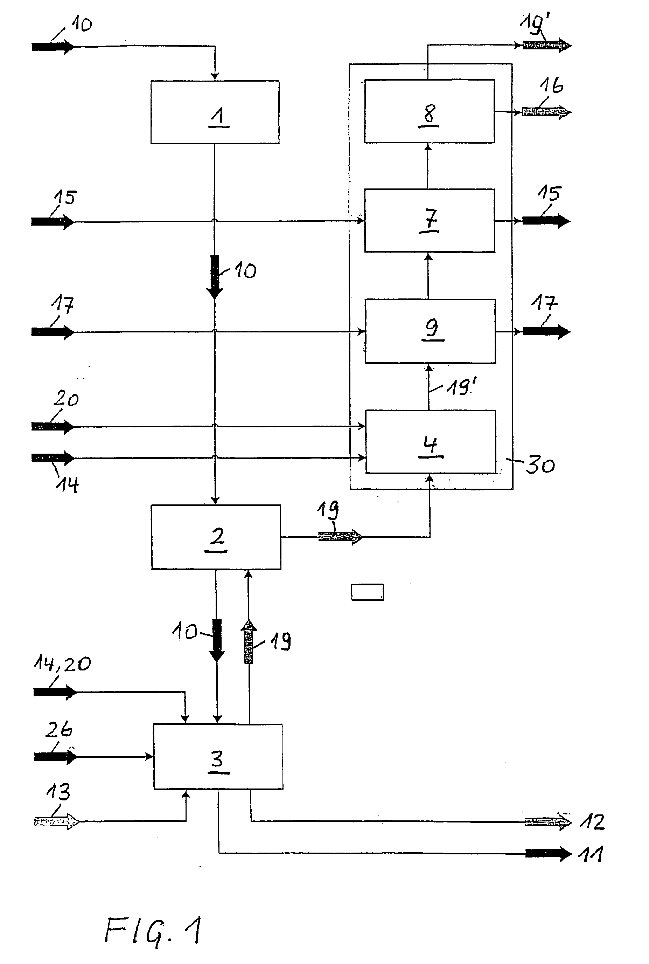

Die Figur 1 zeigt ein vereinfachtes Grundfließbild einer typischen Abgasreinigung eines Schmelzprozesses mit Schrottvorwärmung. Über eine Chargiervorrichtung 1 wird Schrott 10 einem Schrottvorwärmer 2 zugeführt und dort mit dem Prozessgas 19 des Schmelzaggregats 3 aufgeheizt. Der heiße Schrott 10 gelangt dann in das Schmelzaggregat 3, wo er unter Zusatz von Sauerstoff 20 und Zuschlagstoffen 13 durch fossile 14 und/oder elektrische 26 Energie aufgeschmolzen und als Schmelze 11 und Schlacke 12 das Schmelzaggregat 3 verlässt.

Nach seinem Austritt aus dem Schrottvorwärmer 2 wird das Prozessgas 19 dem Abgasbehandlungssystem 30 zugeführt, in dem es zunächst mittels fossiler Energie 14 unter Zusatz von Sauerstoff 20 nachverbrannt wird. Das in der Nachverbrennungsvorrichtung 4 so entstandene Abgas 19' wird dann in einer Kühlvorrichtung 9 mittels Wasser 17 gekühlt, in einer Adsorbiervorrichtung 7 durch Anlagerung an einem Adsorbens 15 von Schadstoffen befreit und schließlich in einer Entstaubungsanlage 8 vom Staub 16 getrennt.

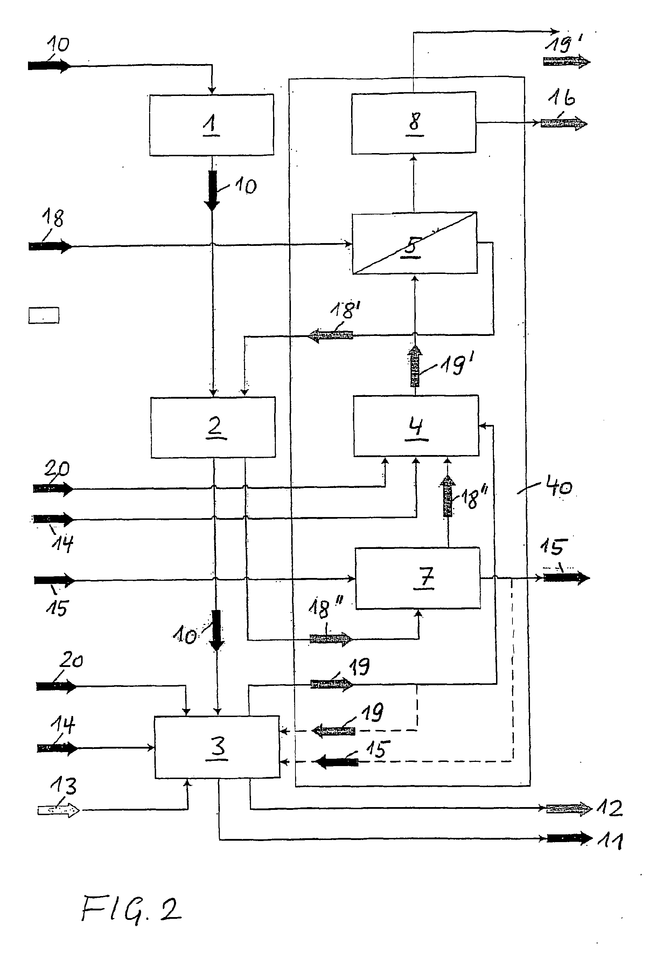

In der Figur 2 ist ein vereinfachtes Schema des erfindungsgemäßen Abgasbehandlungssystems 40 mit offener Vorwärm- und Abgasbehandlung des Schmelzprozesses mit Schrottvorwärmung dargestellt. Auch hier wird der Schrott 10 über eine Chargiervorrichtung 1 einem Schrottvorwärmer 2 zugeführt und dort nicht mehr mit dem Prozessgas 19 des Schmelzaggregats 3 direkt aufgeheizt, sondern indirekt durch Heißluft 18', die in einem Wärmetauscher 5 mit dem Prozessgas 19 aus Luft 18 aufgeheizt wurde. Der heiße Schrott 10 gelangt dann wie in Fig. 1 dargestellt in das Schmelzaggregat 3, wo er unter Zusatz von Zuschlagstoffen und fallweise von mit Schadstoffen beladenem Adsorbens, Sauerstoff und fallweise zurückgeführtem Prozessgas 19 ausschließlich durch fossile Energie zu Schmelze 11 und Schlacke 12 aufgeschmolzen wird.

Nach seinem Austritt aus dem Schrottvorwärmer 2 wird das Prozessgas 19 dem erfindungsgemäßen Abgasbehandlungssystem 40 zugeführt, in dem es gleichfalls zunächst mittels fossiler Energie 14 unter Zusatz von Sauerstoff 20 und gereinigter Warmluft 18" aus der Adsorbiervorrichtung 7 in der Nachverbrennungsvorrichtung 4 nachverbrannt wird. Das hier erhaltene Abgas 19' gelangt dann in den Wärmetauscher 5, heizt dort die Frischluft 19 auf und wird anschließend in der Nachverbrennungsvorrichtung 8 vom Staub 16 befreit.

Der offene Kreislauf für die Vorwärmluft 18 verläuft wie folgt: Die im Wärmetauscher 5 zur Heißluft 18' aufgeheizte Luft 18 wird in den Schrottvorwärmer 2 eingebracht und verlässt diesen als schadstoffbeladene Warmluft 18", die in der Adsorbiervorrichtung 7 durch eingebrachten Adsorber 15 von Schadstoffen befreit und danach als Oxidator für das Prozessgas 19 in der Nachverbrennungsvorrichtung 4 verwendet wird. Die weitere Behandlung der Warmluft 18" geschieht gemeinsam mit dem Prozessgas 19 als Abgas 19' wie bereits oben beschrieben.

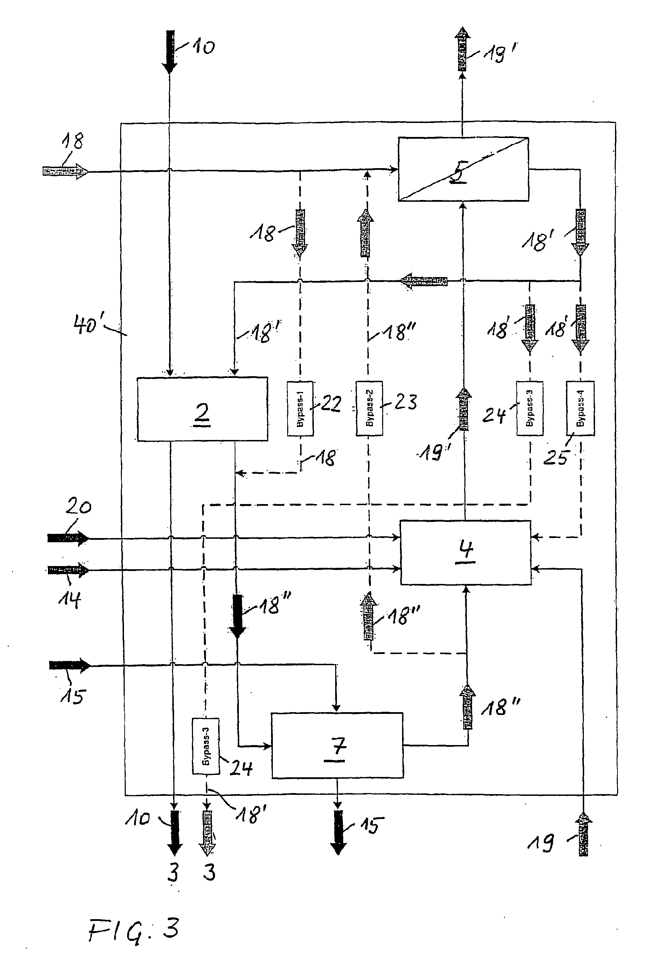

In Figur 3 ist in einem Teilausschnitt das Abgasbehandlungssystem 40 der Fig. 2 dargestellt, erweitert durch den Schrottvorwärmer 2 sowie durch einige Bypässe 22, 23, 24, 25 zur verbesserten Regelung der Temperaturen im Luftkreislauf. Im so erweiterten Abgasbehandlungssystem 40' wird durch den
- Bypass 22 Frischluft 18 zur der mit Schadstoffen beladenen Warmluft 18" vor deren Einleitung in die Nachverbrennungsvorrichtung 4 zugemischt,
- Bypass 23 von Schadstoffen befreite Warmluft 18" zur Frischluft 18 zugemischt,
- Bypass 24 im Wärmetauscher 5 erzeugte Heißluft 18' direkt dem Schmelzaggregat 3 zugeführt,
- Bypass 25 im Wärmetauscher 5 erzeugte Heißluft 18' direkt der Nachverbrennungsvorrichtung 4 zugeführt.

Durch diese Bypässe 22, 23, 24, 25 ist somit eine zusätzliche Einflussnahme auf die Temperaturregelung der Schadstoffabtrennung, der Lufterhitzung, des Einschmelzens und der Nachverbrennung in einfacher Weise möglich.

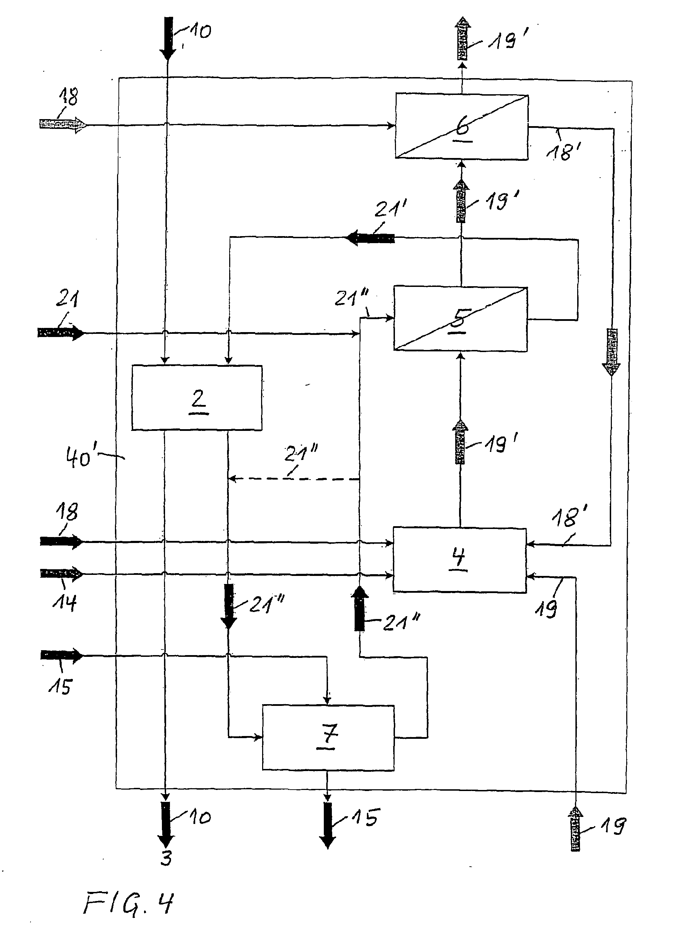

In der Figur 4 ist ein alternatives Schema der Vorwärm- und Abgasbehandlung in einem erfindungsgemäßen Abgasbehandlungssystem 40' mit einem geschlossenen Kreislauf für das Vorwärmmedium und separater Vorwärmung der Nachverbrennungsluft dargestellt. Als Vorwärmmedium wird bei diesem Anwendungsbeispiel ein im Wärmetauscher 5 zum Heißgas 21' aufgeheiztes I-nertgas 21 verwendet, das nach der Schrottvorwärmung und anschließender Schadstoffabtrennung im geschlossenen Kreislauf zum Wärmetauscher 5 zurückgeführt wird. Fallweise ist es bei dieser Fahrweise auch möglich, eine Teilmenge des schadstofffreien Warmgases 21" vor seiner erneuten Aufheizung im Kreislauf zum schadstoffbelasteten Warmgas 21" zurückzuführen (siehe die gestrichelte Linie in Fig. 4).

Die für die Nachverbrennung erforderliche Luft 18 ist somit vom Vorwärmmedium, dem Heißgas 21' vollständig getrennt und wird deshalb in einem separaten Wärmetauscher 6 zur Heißluft 18' aufgeheizt.

Das Verfahren der Erfindung sowie die zu dessen Durchführung erforderliche Anlage ist nicht auf die in den Fließbildern dargestellten Ausführungsbeispiele beschränkt; vielmehr können die einzelnen Anlagenteile und die sie verbindenden Leitungssysteme je nach den vorgegebenen Bedingungen durch den Fachmann anders angeordnet oder erweitert werden. Die erfindungsgemäße energetische, strömungstechnische und räumliche Entkoppelung von Vorwärmung und Schmelzen und von Nachverbrennung und Vorwärmung sollte dabei aber auf jeden Fall erhalten bleiben.

### Bezugszeichenliste

### Verfahrensstufen

- 1: Chargiervorrichtung
- 2: Schrottvorwärmer
- 3: Schmelzaggregat
- 4: Nachverbrennungsvorrichtung
- 5: Wärmetauscher für Vorwärmung
- 6: Wärmetauscher für Nachverbrennung
- 7: Adsorbiervorrichtung zur Schadstoffabtrennung
- 8: Entstaubungsanlage
- 9: Kühlvorrichtung

### Feste bzw. flüssige Stoffe

- 10: Schrott
- 11: Schmelze
- 12: Schlacke
- 13: Zuschlagstoffe
- 14: Fossile Energieträger
- 15: Adsorbens
- 16: Staub
- 17: Wasser

### Gase

- 18: Luft
- 18': Heißluft
- 18": Warmluft
- 19: Abgas (Prozessgas)
- 19': Abgas (nach Nachverbrennung)
- 20: Sauerstoff
- 21: Inertgas
- 21': Heiß-Inertgas
- 21": Warm-Inertgas

### Sonstige

- 22: Bypass 1 (Luftzumischung zur Warmluft)
- 23: Bypass 2 (Warmluftzumischung zur Luft)
- 24: Bypass 3 (Heißluft direkt zum Schmelzen)
- 25: Bypass 4 (Heißluft direkt zur Nachverbrennung)
- 26: Elektrische Energie
- 30: Abgasbehandlungssystem nach dem Stand der Technik
- 40: Abgasbehandlungssystem mit offenem Vorwärmkreislauf
- 40': Abgasbehandlungssystem mit geschlossenem Vorwärmkreislauf

## Patentansprüche

1. Verfahren zur Sekundärstahlerzeugung auf Schrottbasis, wobei der Schrott (10) über eine Chargiervorrichtung (1) in einen Schrottvorwärmer (2) eingetragen, dort vorgewärmt und anschließend in ein Schmelzaggregat (3) gebracht und aufgeschmolzen wird, wobei das das Schmelzaggregat (3) verlassende Prozessgas (19) zur Vorwärmung des Schrotts (10) genutzt und in einer Nachverbrennungsvorrichtung (4) und einer anschließenden Entstaubungsanlage (8) von Schadstoffen und Staub (16) befreit als gekühltes gereinigtes Abgas (19') aus der Anlage ausgeschleust wird, **gekennzeichnet durch** einen auf die Gasführung des Vorwärmsystems bezogene
• energetische, strömungstechnische und räumliche Entkoppelung von Vorwärmung und Schmelzen und eine
• energetische, strömungstechnische und räumliche Entkoppelung von Nachverbrennung und Vorwärmung.

2. Verfahren nach Anspruch 1, **dadurch gekennzeichnet, dass** die das Schmelzaggregat verlassenden Prozessgase (19) direkt in die Nachverbrennungsvorrichtung (4) eingeführt, anschließend in einem Wärmetauscher (5, 6) durch Aufheizung von Gas (18, 21) gekühlt und danach entstaubt werden.

3. Verfahren nach Anspruch 2, **dadurch gekennzeichnet, dass** die Vorwärmung des Schrotts (10) im Schrottvorwärmer (2) im Gleichstrom oder im Gegenstrom mittels des im Wärmetauscher (5) aus Luft (18), aus mit Sauerstoff angereicherter Luft oder aus Inertgas (21) erzeugten heißen Vorwärmgases (18', 21') durchgeführt wird.

4. Verfahren nach Anspruch 3, **dadurch gekennzeichnet, dass** das heiße Vorwärmgas (18', 21') nach der Vorwärmung des Schrotts (10) als abgekühltes Warmgas (18", 21") in einer Adsorbiervorrichtung (7) mittels eines Adsorbers (15) einer Schadstoffabtrennung unterzogen wird.

5. Verfahren nach Anspruch 4, **dadurch gekennzeichnet, dass** der mit Schadstoffen beladene Adsorber (15) teilweise in das Schmelzaggregat (3) rezirkuliert wird.

6. Verfahren nach Anspruch 3, 4 oder 5, **dadurch gekennzeichnet, dass** bei Verwendung von Luft (18) oder von mit Sauerstoff angereicherter Luft zur Vorwärmung des Schrotts (10) die Warmluft (18") nach der Schadstoffabtrennung der Nachverbrennungsvorrichtung (4) zugeführt und dort als Oxidator für die Nachverbrennung der Prozessgase (19) genutzt wird.

7. Verfahren nach Anspruch 3, 4 oder 5, **dadurch gekennzeichnet, dass** bei Verwendung von Inertgas (21) dieses nach der Schadstoffabtrennung im Kreislauf zum Wärmetauscher (5) zurückgeführt wird.

8. Verfahren nach Anspruch 7, **dadurch gekennzeichnet, dass** eine Teilmenge des Inertgases (21) im geschlossenen Kreislauf zur Adsorbiervorrichtung (7) ohne vorherige Wärmetauschung zurückgeführt wird.

9. Verfahren nach Anspruch 7 oder 8, **dadurch gekennzeichnet, dass** bei Verwendung von Inertgas (21) die für die Nachverbrennung benötigte Luft (18) in einem dem Wärmetauscher (5) für das Inertgas (21) nachgeordneten weiteren Wärmetauscher (6) aufgeheizt wird.

10. Verfahren nach einem oder mehreren der Ansprüche 1 bis 6, **dadurch gekennzeichnet, dass** zur Regelung der Eintrittstemperatur in die Adsorbiervorrichtung (7) der schadstoffbelasteten Warmluft (18") mit einem Bypass (22) Frischluft (18) zugemischt wird.

11. Verfahren nach einem oder mehreren der Ansprüche 1 bis 6 oder 10, **dadurch gekennzeichnet, dass** zur Temperaturregelung der dem Schrottvorwärmer (2) zugeführten Heißluft (18') in einem Bypass (23) vor dem Wärmetauscher (5) der Frischluft (18) gereinigte Warmluft (18") zugemischt wird.

12. Verfahren nach einem oder mehreren der Ansprüche 1 bis 6, 10 oder 11 **dadurch gekennzeichnet, dass** als zusätzlicher Oxidator in einem Bypass (25) der Nachverbrennungsvorrichtung (4) eine Teilmenge der Heißluft (18') zugeführt wird.

13. Verfahren nach einem oder mehreren der Ansprüche 1 bis 12, **dadurch gekennzeichnet, dass** als zusätzlicher Oxidator in einem Bypass (24) eine Teilmenge der Heißluft (18) direkt dem Schmelzaggregat (3) zugeführt wird.

14. Anlage zur Durchführung des Verfahrens nach den Ansprüchen 1 bis 13 zur Sekundärstahlerzeugung auf Schrottbasis, bei dem der Schrott (10) über eine Chargiervorrichtung (1) in einen Schrottvorwärmer (2) eingetragen, dort vorgewärmt und anschließend in ein Schmelzaggregat (3) gebracht und aufgeschmolzen wird, wobei das das Schmelzaggregat (3) verlassende Prozessgas (19) zur Vorwärmung des Schrotts (10) genutzt und in einer Nachverbrennungsvorrichtung (4) und einer anschließenden Entstaubungsanlage (8) von Schadstoffen und Staub (16) befreit als gekühltes gereinigtes Abgas (19') aus der Anlage ausgeschleust wird, **dadurch gekennzeichnet, dass** die Anlagenkomponenten räumlich voneinander getrennt und bezogen auf die Gasführung des Vorwärmsystems die einzelnen Komponenten des Abgasbehandlungssystems in folgender Reihenfolge angeordnet sind, nämlich Adsorbiervorrichtung zur Schadstoffabtrennung (7), Nachverbrennungsvorrichtung (4), Wärmetauscher (5) zur Gasaufheizung und Prozessgaskühlung, Entstaubungsanlage (8), wobei diese Anlagenkomponenten über Leitungen so untereinander verbunden sind, dass
• das Prozessgas (19) nach seinem Austritt aus dem Schmelzaggregat (3) direkt in die Nachverbrennungsvorrichtung (4), von dort zum Wärmetauscher (5,) und schließlich in die Entstaubungsanlage (8) geführt wird, und
• das Vorwärmgas (18, 21) über den Wärmetauscher (5), dem Schrottvorwärmer (2) und einer Adsorbiervorrichtung (7) gleichfalls in die Nachverbrennungsvorrichtung (4) geführt und dort mit dem Prozessgas (19) vereint wird.

15. Anlage nach Anspruch 14, **dadurch gekennzeichnet, dass** zur Entkoppelung der Nachverbrennungsvorrichtung (4) vom Schrottvorwärmer (2) ein zusätzlicher Wärmetauscher (6) im Prozessgasstrom (19) angeordnet ist, durch den nur die für die Nachverbrennung erforderliche Luft (18) aufgeheizt wird, während das Vorwärmgas, beispielsweise ein Inertgas (21), in einem geschlossenen Kreislauf unter Ausschaltung der Nachverbrennung durch die Anlagenkomponenten Wärmetauscher (5), Schrottvorwärmer (2), Adsorbiervorrichtung (7) geführt wird.

## Claims

1. Method for secondary steel production on the basis of scrap, wherein the scrap (10) is charged by way of a charging device (1) into a scrap preheater (2), preheated there and subsequently introduced into a melting unit (3) and melted, wherein the process gas (19) departing the melting unit (3) is used for preheating the scrap (10) and is transferred from the plant as cooled, cleaned exhaust gas (19') freed of noxious substances and dust (16) to a post-combustion device (4) and an adjoining dust removal installation (8), **characterised by**, referred to the gas guidance of the preheating system,
- a decoupling from preheating and smelting in terms of energy, in terms of flow and physically and
- a decoupling from post-combustion and preheating in terms of energy, in terms of flow and physically.

2. Method according to claim 1, **characterised in that** the process gas (19) departing the melting unit is introduced directly into the post-combustion device (4), subsequently cooled in a heat exchanger (5, 6) through heating up by gas (18, 21) and thereafter subjected to dust removal.

3. Method according to claim 2, **characterised in that** the preheating of the scrap (10) in the scrap preheater (2) is carried out with the same flow direction or with opposite flow direction by means of the hot preheating gas (18', 21') produced in the heat exchanger (5) from air (18), from air enriched with oxygen or from inert gas (21).

4. Method according to claim 3, **characterised in that** the hot preheating gas (18', 21') after preheating of the scrap (10) is subjected as cooled warm gas (18", 21") to noxious substance separation in an adsorbing device (7) by means of an adsorber (15).

5. Method according to claim 4, **characterised in that** the adsorber (15) laden with noxious substances is partly recirculated into the melting unit (3).

6. Method according to claim 3, 4 or 5, **characterised in that** in the case of use of air (18) or air enriched with oxygen for preheating the scrap (10) the warm air (18") after noxious substance separation is fed to the post-combustion device (4) and used there as an oxidator for post-combustion of the process gases (19).

7. Method according to claim 3, 4 or 5, **characterised in that** in the case of use of inert gas (21) this is fed after the noxious substance separation to the circuit for the heat exchanger (5).

8. Method according to claim 7, **characterised in that** a part quantity of the inert gas (21) is fed in closed circuit to the adsorbing device (7) without prior heat exchange.

9. Method according to claim 7 or 8, **characterised in that** in the case of use of inert gas (21) the air (18) required for the post-combustion is heated up in a further heat exchanger (6) downstream of the heat exchanger (5) for the inert gas (21).

10. Method according to one or more of claims 1 to 6, **characterised in that** for regulation of the inlet temperature to the adsorbing device (7) fresh air (18) is admixed by a bypass (22) to warm air (18") laden with noxious substance.

11. Method according to one or more of claims 1 to 6 or 10, **characterised in that** for temperature regulation of the hot air (18') fed to the scrap preheater (2) cleaned warm air (18") is admixed to the fresh air (18') in a bypass (23) ahead of the heat exchanger (5).

12. Method according to one or more of claims 1 to 6, 10 or 11, **characterised in that** a part quantity of the hot air (18') is fed as additional oxidator in a bypass (25) to the post-combustion device (4).

13. Method according to one or more of claims 1 to 12, **characterised in that** a part quantity of the hot air (18) is fed as additional oxidator in a bypass (24) directly to the melting unit (3).

14. Plant for carrying out the method according to claims 1 to 13 for secondary steel production on a scrap basis, in which the scrap (10) is charged by way of a charging device (1) into a scrap preheater (2), preheated there and subsequently introduced into a melting unit (3) and melted, wherein the process gas (19) departing the melting unit (3) is used for preheating the scrap (10) and is transferred from the plant as cooled cleaned waste gas (19') freed of noxious substances and dust (16) to a post-combustion device (4) and an adjoining dust removal installation (8), **characterised in that** the plant components are physically separate from one another and the individual components of the exhaust gas treatment system are arranged in the following sequence referred to the gas guidance of the preheating system, namely adsorbing device for noxious substance separation (7), post-combustion device (4), heat exchanger (5) for gas heating up and process gas cooling and dust removal installation (8), wherein these plant components are so interconnected by way of ducts that
- the process gas (19) after its exit from the melting unit (3) is led directly into the post-combustion device (4), from there to the heat exchanger (5) and finally to the dust removal installation (8), and
- the preheating gas (18, 21) is led by way of the heat exchanger (5), the scrap preheater (2) and an adsorbing device (7) equally to the post-combustion device (4) and combined there with the process gas (19).

15. Plant according to claim 14, **characterised in that** for decoupling the post-combustion device (4) from the scrap preheater (2) there is arranged in the process gas flow (19) an additional heat exchanger (6) by which only the air (18) required for the post-combustion is heated up, whereas the preheating gas, for example an inert gas (21), is led in a closed circuit, with exclusion of the post-combustion, through the plant components of heat exchanger (5), scrap preheater (2) and adsorbing device (7).

## Revendications

1. Procédé de fabrication d'acier secondaire sur base de ferrailles, les ferrailles (10) étant introduites par l'intermédiaire d'un dispositif de chargement (1) dans un préchauffeur de ferrailles (2), préchauffées dans ce dernier, puis menées ensuite dans un agrégat de fusion (3) et fondues, le gaz du processus (19) quittant l'agrégat de fusion (3) étant utilisé pour préchauffer les ferrailles (10) et étant éclusé hors de l'installation dans un dispositif de post-combustion (4) et dans une installation de dépoussiérage (8) qui y fait suite, après avoir été libéré de substances nocives et de poussières (16) sous forme de gaz d'échappement épuré (19') refroidi, **caractérisé par**, par rapport à l'entraînement du gaz du système de préchauffage
• un découplage énergétique, technique d'écoulement et physique du préchauffage et de la fusion
• un découplage énergétique, technique d'écoulement et physique de la post-combustion et du préchauffage.

2. Procédé selon la revendication 1, **caractérisé en ce que**, les gaz du processus (19) quittant l'agrégat de fusion sont introduits directement dans le dispositif de post-combustion (4), puis refroidis dans un échangeur thermique (5, 6) par échauffement de gaz (18, 21) et dépoussiérés par la suite.

3. Procédé selon la revendication 2, **caractérisé en ce que**, le préchauffage des ferrailles (10) dans le préchauffeur de ferrailles (2) est réalisé avec un courant dans un même sens ou avec courant inverse au moyen du gaz de préchauffage (18', 21') chaud généré dans l'échangeur thermique (5) à partir d'air (18), à partir d'air enrichi en oxygène ou à partir de gaz inerte (21).

4. Procédé selon la revendication 3, **caractérisé en ce que**, après le préchauffage des ferrailles (10), le gaz de préchauffage chaud (18', 21') est soumis sous la forme de gaz chaud refroidi (18", 21") à une séparation des substances nocives, dans un dispositif d'adsorption (7), au moyen d'un adsorbant (15).

5. Procédé selon la revendication 4, **caractérisé en ce que**, l'adsorbant (15) chargé en substance nocive est partiellement recyclé dans l'agrégat de fusion (3).

6. Procédé selon la revendication 3, 4 ou 5, **caractérisé en ce que**, si on utilise de l'air (18) ou de l'air enrichi en oxygène pour le préchauffage des ferrailles (10), après la séparation des substances nocives, l'air chaud (18") est acheminé vers le dispositif de post-combustion (4) et y est utilisé en tant qu'oxydant pour la post-combustion du gaz du processus (19).

7. Procédé selon la revendication 3, 4 ou 5, **caractérisé en ce que**, si on utilise du gaz inerte (21), après la séparation des substances nocives, ce dernier est ramené dans le circuit menant vers l'échangeur thermique (5).

8. Procédé selon la revendication 7, **caractérisé en ce que**, une quantité partielle du gaz inerte (21) est ramenée en circuit fermé vers le dispositif d'adsorption (7), sans échange thermique préalable.

9. Procédé selon la revendication 7 ou 8, **caractérisé en ce que**, si on utilise du gaz inerte (21), l'air (18) nécessaire pour la post-combustion est échauffé dans un échangeur thermique (6) supplémentaire, monté en aval de l'échangeur thermique (5) pour le gaz inerte (21).

10. Procédé selon l'une quelconque ou plusieurs des revendications 1 à 6, **caractérisé en ce que**, pour la régulation de la température d'entrée dans le dispositif d'adsorption (7), de l'air frais (18) est mélangé à l'air chaud (18") chargé en substances nocives, à l'aide d'une dérivation (22).

11. Procédé selon l'une quelconque ou plusieurs des revendications 1 à 6 ou 10, **caractérisé en ce que,** pour la régulation de la température de l'air chaud (18') acheminé vers le préchauffeur de ferrailles (2), dans une dérivation (23) en amont de l'échangeur thermique (5), de l'air chaud purifié (18") est mélangé à l'air frais (18).

12. Procédé selon l'une quelconque ou plusieurs des revendications 1 à 6, 10 ou 11, **caractérisé en ce que**, une quantité partielle de l'air chaud (18') est acheminée dans une dérivation (25) vers le dispositif de post-combustion (4), en tant qu'oxydant supplémentaire.

13. Procédé selon l'une quelconque ou plusieurs des revendications 1 à 12, **caractérisé en ce que,** une quantité partielle de l'air chaud (18) est directement acheminée dans une dérivation (24) vers l'agrégat de fusion (3), en tant qu'oxydant supplémentaire.

14. Installation pour la réalisation du procédé selon les revendications 1 à 13 pour la fabrication d'acier secondaire sur la base de ferrailles, dans lequel les ferrailles (10) sont introduites par l'intermédiaire d'un dispositif de chargement (1) dans un préchauffeur de ferrailles (2), préchauffées dans ce dernier, puis menées ensuite dans un agrégat de fusion (3) et fondues, le gaz du processus (19) quittant l'agrégat de fusion (3) étant utilisé pour préchauffer les ferrailles (10) et étant éclusé hors de l'installation dans un dispositif de post-combustion (4) et dans une installation de dépoussiérage (8) qui y fait suite, après avoir été libéré de substances nocives et de poussières (16) sous forme de gaz d'échappement épuré (19') refroidi, **caractérisé en ce que** les composants de l'installation sont physiquement séparés les uns des autres et par rapport à l'entraînement du gaz du système de préchauffage, les composants individuels du système de traitement des gaz d'échappement sont disposés dans l'ordre suivant, à savoir dispositif d'adsorption pour la séparation des substances nocives (7), dispositif de post-combustion (4), échangeur thermique (5) pour l'échauffement du gaz et le refroidissement du gaz de processus, installation de dépoussiérage (8), lesdits composants de l'installation étant reliés entre eux par l'intermédiaire de conduits, de sorte que
• après sa sortie de l'agrégat de fusion (3), le gaz du processus (19) soit directement mené dans le dispositif de post-combustion (4), de là vers l'échangeur thermique (5) et finalement dans l'installation de dépoussiérage (8), et
• le gaz de préchauffage (18, 21) soit mené par l'intermédiaire de l'échangeur thermique (5), du préchauffeur de ferrailles (2) et d'un dispositif d'adsorption (7) également dans le dispositif de post-combustion (4), pour y être associé au gaz du processus (19).

15. Installation selon la revendication 14, **caractérisée en ce que**, pour le découplage du dispositif de post-combustion (4) par rapport au préchauffeur de ferrailles (2), un échangeur thermique (6) supplémentaire, n'échauffant que l'air (18) nécessaire pour la post-combustion est disposé dans le courant de gaz du processus (19), alors que le gaz de préchauffage, par exemple un gaz inerte (21) est entraîné dans un circuit fermé, en excluant la post-combustion, à travers les composants de l'installation que sont l'échangeur thermique (5), le préchauffeur de ferrailles (2), le dispositif d'adsorption (7).
